# EUROPEAN PATENT SPECIFICATION

(11) **EP 4 600 855 B1**
(45) Date of publication and mention of the grant of the patent: **21.10.2026**
(21) Application number: 25186353.6
(22) Date of filing: 30.06.2025
(51) Int. Cl.: G06F 21/55, G06F 21/57, G06F 21/64, G06F 11/32

(54) **METHOD, APPARATUS, DEVICE, AND STORAGE MEDIUM FOR DATA SECURITY RISK ALERTING**
VERFAHREN, VORRICHTUNG, GERÄT UND SPEICHERMEDIUM ZUR WARNUNG VOR DATENSICHERHEITSRISIKEN
PROCÉDÉ, APPAREIL, DISPOSITIF ET SUPPORT DE STOCKAGE POUR ALERTE DE RISQUE DE SÉCURITÉ DE DONNÉES

(30) Priority: 15.10.2024 CN 202411441890
(43) Date of publication of application: 13.08.2025
(73) Proprietor: Beijing Volcano Engine Technology Co., Ltd., Beijing 100190 (CN)
(72) Inventor: Chen, Shaohua, Beijing, 100028 (CN); Leong, Kay Mei, 018960 Singapore (SG); Zhang, Dongming, Beijing, 100028 (CN); Wang, Quan, Beijing, 100028 (CN); Chen, Jiaqi, Beijing, 100028 (CN)
(74) Representative: Isarpatent

(56) References cited:
- CN-A- 118 333 409
- US-A1- 2020 356 676
- US-A1- 2023 028 044
- US-A1- 2023 239 303

## Description

### FIELD

Example embodiments of the present disclosure generally relate to the field of computers, and in particular, to a method, an electronic device, a computer-readable storage medium, and a computer program product for data security risk alerting.

### BACKGROUND

At present, organizations (enterprises, government agencies, other groups, or the like) face severe challenges in data security management, especially in terms of preventing data leakage and illegal operations. Existing data security management solutions rely on security management personnel for operation. On one hand, manual operation is difficult to guarantee the identification accuracy of data security. On the other hand, it is difficult for security management personnel to quickly identify high-risk risks related to data security.

US 2023/239303 A1 discloses a method for monitoring internal security vulnerabilities in an enterprise based on determining composite risk scores for enterprise users. The method can include receiving information about an enterprise user, such as their role, identifying risks associated with the role, determining, based on the risks, a role-based risk score for the user, receiving, event alerts from a network security detection system, each event alert having been generated by the network security detection system identifying network activity on the enterprise's network that satisfies one or more security event rules indicative of a potential network security issue, determining that one or more of the event alerts are associated with the user in the enterprise to generate user-event pairings, determining, based on the user-event pairings, an event-based risk score for the user, and generating a composite risk score for the user based on aggregating the role-based risk score and the event-based risk score.

CN 118 333 409 A discloses a chemical safety inspection method and system based on a large language model. The method includes: acquiring image and audio information of a target location; inputting the image and audio information into an image semantic description model and an acoustic semantic description model, respectively; outputting image description text and acoustic description text according to the image semantic description model and the acoustic semantic description model, respectively; pre-constructing risk identification instruction templates and decision instruction templates for the large language model; finding the corresponding risk identification instruction templates based on the image and acoustic description texts; identifying the corresponding risk types based on the risk identification instruction templates; finding decision instruction templates based on the identified image and acoustic description texts and risk types; inputting the decision instruction templates into the large language model to find the corresponding risk decision mapped to a specified value; outputting the found corresponding risk type and risk decision, and executing the corresponding risk decision through the corresponding inspection machine.

### SUMMARY

This application provides a method for data security risk alerting, an electronic device, a computer-readable storage medium, and a computer program product, as defined in the appended set of claims.

In a first aspect of the present disclosure, a method for data security risk alerting is provided. The method may include: determining at least one operation of one or more terminal devices on a data resource in a target time period; identifying, based on the at least one operation, whether there is one or more risks in the data resource using one or more risk identification rules respectively corresponding to the one or more risks, a risk identification rule of the one or more risk identification rules identifying a corresponding risk; and presenting risk alert information for at least one target risk based on an identification of the at least one target risk of the one or more risks, the risk alert information being generated using a machine learning model based on a prompt template corresponding to the at least one target risk.

In a second aspect of the present disclosure, an apparatus for data security risk alerting is provided. The apparatus may include: an operation determination module configured to determine at least one operation of one or more terminal devices on a data resource in a target time period; a risk identification module configured to identify, based on the at least one operation, whether there is one or more risks in the data resource using one or more risk identification rules respectively corresponding to the one or more risks, where a risk identification rule of the one or more risk identification rules identifying a corresponding risk; and a risk alert information presentation module configured to present risk alert information for at least one target risk based on an identification of the at least one target risk of the one or more risks, the risk alert information being generated using a machine learning model based on a prompt template corresponding to the at least one target risk.

In a third aspect of the present disclosure, an electronic device is provided. The device includes at least one processing unit; and at least one memory, being coupled to the at least one processing unit and storing instructions for execution by the at least one processing unit, the instructions, when executed by the at least one processing unit, causing the electronic device to perform the method of the first aspect.

In a fourth aspect of the present disclosure, a computer-readable storage medium is provided. A computer program is stored on the medium, and the computer program, when executed by a processor, implements the method of the first aspect.

In a fifth aspect of the present disclosure, a computer program product is provided. The computer program product includes computer-executable instructions, and the computer-executable instructions, when executed by a processor, implement the method of the first aspect.

It should be understood that the content described in this part is not intended to limit key features or important features of the embodiments of the present disclosure, nor is it intended to limit the scope of the present disclosure. Other features of the present disclosure will become easier to understand through the following description.

### BRIEF DESCRIPTION OF DRAWINGS

The above and other features, advantages, and aspects of the embodiments of the present disclosure will become more apparent when taken in conjunction with the drawings and with reference to the following detailed description. In the drawings, the same or similar reference numerals refer to the same or similar elements, where:
FIG. 1 shows a schematic diagram of an example environment in which embodiments of the present disclosure can be implemented;
FIG. 2 shows a schematic diagram of a process of a method for data security risk alerting according to some embodiments of the present disclosure;
FIG. 3 shows a flowchart of a method for data security risk alerting according to some embodiments of the present disclosure;
FIG. 4 shows an example diagram of a risk identification rule according to some embodiments of the present disclosure;
FIG. 5A shows a schematic diagram of risk alert information for a target risk according to some embodiments of the present disclosure;
FIG. 5B shows a schematic diagram of a presentation of a detailed content of risk alert information for a target risk according to some embodiments of the present disclosure;
FIG. 5C shows a schematic diagram of risk alert information in an object dimension according to some embodiments of the present disclosure;
FIG. 6 shows a schematic structural block diagram of an apparatus for data security risk alerting according to some embodiments of the present disclosure; and
FIG. 7 shows a block diagram of an electronic device that can implement one or more embodiments of the present disclosure.

### DETAILED DESCRIPTION

The embodiments of the present disclosure will be described in more detail below with reference to the drawings. While certain embodiments of the present disclosure are shown in the drawings, it should be understood that the present disclosure can be implemented in various forms and should not be construed as limited to the embodiments set forth herein. Rather, these embodiments are provided for a thorough and complete understanding of the present disclosure. It should be understood that the drawings and embodiments of the present disclosure are only for illustrative purposes and are not intended to limit the scope of protection of the present disclosure.

In the description of the embodiments of the present disclosure, the term "include/comprise" and similar terms should be understood as open-ended inclusions, that is, "include/comprise but not limited to". The term "based on" should be understood as "based at least in part on". The term "one embodiment" or "the embodiment" should be understood as "at least one embodiment". The term "some embodiments" should be understood as "at least some embodiments". Other explicit and implicit definitions may be included below.

Herein, unless explicitly stated, performing a step "in response to A" does not mean that the step is performed immediately after "A", but may include one or more intermediate steps.

It can be understood that the data involved in the technical solution (including but not limited to the data itself, the acquisition, use, storage or deletion of the data) should comply with the requirements of corresponding laws, regulations, and related provisions.

It can be understood that before using the technical solutions disclosed in the embodiments of the present disclosure, the relevant users should be informed of the type, use scope, use scenario, or the like of the information involved in the present disclosure through appropriate means according to relevant laws and regulations, and authorization from the relevant users should be obtained, where the relevant users may include any type of right holder, such as individuals, groups, or the like.

For example, in response to receiving an active request from a user, prompt information is sent to a relevant user to explicitly prompt the relevant user that the operation requested to be performed will need to obtain and use information of the relevant user, so that the relevant user can autonomously select whether to provide information to software or hardware such as an electronic device, an application, a server, or a storage medium that performs the operation of the technical solution of the present disclosure according to the prompt information.

As an optional but non-restrictive implementation, the manner of sending prompt information to a relevant user in response to receiving an active request from the relevant user may be, for example, a pop-up window, and the prompt information may be presented in the pop-up window in the form of text. In addition, the pop-up window may also carry a selection control for the user to select "agree" or "disagree" to provide information to the electronic device.

It can be understood that the above process of notifying and obtaining user authorization is only illustrative and does not constitute a limitation on implementations of the present disclosure, and other manners that meet relevant laws and regulations may also be applied to implementations of the present disclosure.

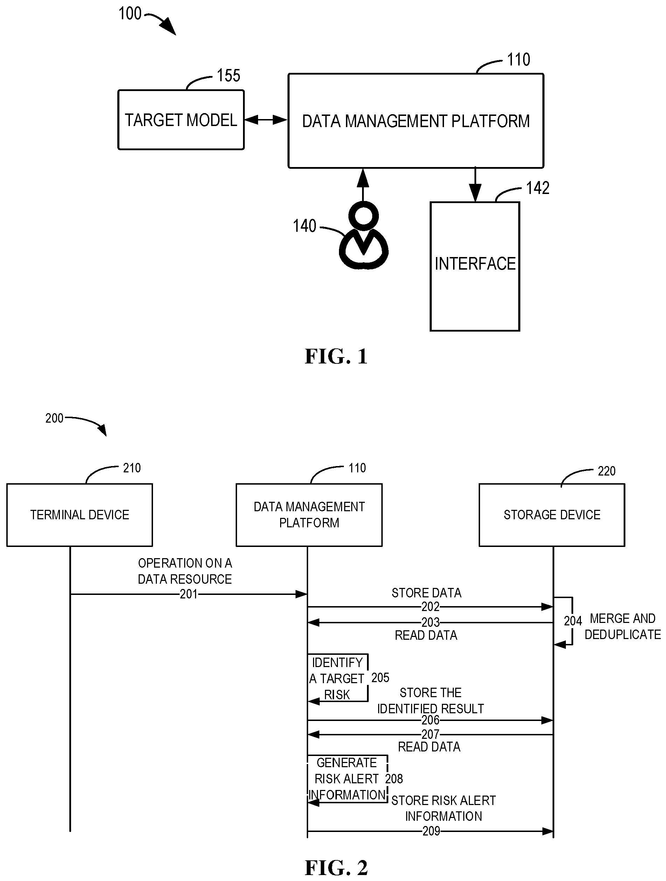

FIG. 1 shows a schematic diagram of an example environment 100 in which embodiments of the present disclosure can be implemented. As shown in FIG. 1, the environment 100 may include a data management platform 110.

In this example environment 100, the data management platform 110 may obtain an operation by one or more terminal devices on a data resource of an organization (for example, an enterprise, a group). The data resource may be data inside the organization, such as research and development data, email data, or the like. The operations on the data resource may include accessing, downloading, sending, or the like. The data management platform 110 may automatically identify the operations by the one or more terminal devices on the data resources. In a case where the identified result is that the operation on the data resource belongs to a risk operation, the data management platform 110 may present risk alert information for the risk operation on an interface to inform an administrator. In some cases, a user 140 may be a user who operates the data resource by using a terminal device. In some cases, the user 140 may be a user who manages the data resource by using a terminal device, for example, an administrator of an enterprise.

In some embodiments, the implementation of at least some functions of the data management platform 110 may be implemented based on a target model 155. In the process of the data management platform 110 presenting the risk alert information, one or more target models 155, for example, capabilities of the target model 155, may be invoked. As used herein, the term "model" may learn an association between a corresponding input and output from training data, so that after the training is completed, a corresponding output may be generated for a given input. The generation of the model may be based on machine learning techniques. Deep learning is a machine learning algorithm that processes inputs and provides corresponding outputs using multiple processing units. A neural network model is an example of a model based on deep learning. In this disclosure, a "model" may also be referred to as a "machine learning model", a "learning model", a "machine learning network" or a "learning network", and these terms are used interchangeably herein.

The data management platform 110 may be deployed locally on the terminal device of the user 140 and/or may be supported by a server-side device. For example, the terminal device of the user 140 may run a client of the data management platform, and the client may support the interaction between the user and the data management platform provided by the server-side. In a case where the data management platform runs locally on the terminal device of the user, the user 140 may directly interact with the local data management platform using the terminal device. In a case where the data management platform runs on a server-side device, the server-side device may implement service provisioning for the client running on the terminal device based on a communication connection with the terminal device. The data management platform 110 may present a corresponding interface 142 to the user 140 based on the operation of the user 140, to output information related to data management to the user 140 and/or receive information related to data management from the user 140.

The data management platform 110 may run on a suitable electronic device. The electronic device here may be any type of device with computing capabilities, including a terminal device or a server-side device. The terminal device may be any type of mobile terminal, fixed terminal, or portable terminal, including mobile phones, desktop computers, laptop computers, notebook computers, netbook computers, tablet computers, media computers, multimedia tablets, personal communication system (PCS) devices, personal navigation devices, personal digital assistants (PDA), audio/video players, digital cameras/camcorders, positioning devices, TV receivers, radio broadcast receivers, ebook devices, gaming devices, or any combination of the foregoing, including accessories and peripherals of these devices or any combination thereof. The server-side device may include, for example, a computing system/server, such as a mainframe, an edge computing node, a computing device in a cloud environment, and so on. In some embodiments, the data management platform 110 may be implemented based on cloud services.

In data security management of modern enterprises, with the development of informatization and digitalization, enterprises face huge data security risks, especially in terms of preventing data leakage and illegal operations on data resources. To deal with these risks, many enterprises deploy data leak prevention (DLP) systems. The system generates alert information by identifying operations by objects on designated data (such as research and development data). However, existing DLP systems face multiple challenges in operation. For example, challenges include a large number of alerts generated by DLP systems, and enterprises need to invest a large amount of manpower to screen and analyze the alert data. The cost of security management is invisibly increased. For another example, challenges also include the difficulty of analyzing alert data. For example, not all enterprises have mature security operation experience, and when facing a large amount of risk alert data, enterprises often lack effective means to discover and deal with critical risks in a timely manner. In addition, most enterprises can only analyze these alert data as logs afterwards, and cannot realize real-time warning and handling of risks. For another example, challenges also include the difficulty of reporting and summarizing alert data. When reporting on data risk management, security operation personnel in an enterprise often need to summarize a large number of written security incident reports, which consumes a lot of manpower and time, thereby affecting the overall efficiency of security management.

In the embodiments of the present disclosure, an improved solution for data security risk alerting is proposed. The solution may be used in an IT management system or a data security management system of an enterprise. In this solution, a data management platform determines at least one operation by one or more terminal devices on a data resource in a target time period. Whether there is one or more risks in the data resource is identified based on the at least one operation using one or more risk identification rules respectively corresponding to the one or more risks, where a risk identification rule of the one or more risk identification rules identifies a corresponding risk. Risk alert information for at least one target risk is presented based on an identification of the at least one target risk of the one or more risks, where the risk alert information is generated using a machine learning model based on a prompt template corresponding to the at least one target risk.

Through the above process, based on a specific operation on the data resource and a predefined risk identification rule, the data management platform may identify potential risks in the operation more accurately, thereby reducing false alerts and irrelevant alerts. Each risk identification rule is designed for different risk scenarios to ensure the relevance of the alert information. In addition, through real-time detection and risk analysis of the operation, potential high-risk operations may be identified more quickly, and alerts may be sent in time to help enterprises respond quickly when risks occur.

FIG. 2 shows an example process of a method 200 for data security risk alerting according to some embodiments of the present disclosure. The data management platform 110 may obtain an operation by a terminal device 210 on an enterprise data resource. The example shown in FIG. 2 only shows a single terminal device 210, but in an actual scenario, there may be a plurality of terminal devices 210.

The data management platform 110 receives (201) information involved in the operation by the terminal device 210 on the enterprise data resource. The data management platform 110 first stores (202) the information involved in the operation into a storage device 220. The data management platform 110 may perform risk identification on the received information involved in the operation in real time, or may read (203) the information involved in the operation that has been stored in the storage device 220 and perform risk identification. In order to ensure the accuracy of the data, the storage device 220 may merge and deduplicate (204) the information involved in the operation to avoid duplication.

For example, the data management platform 110 may identify (205) whether the operation conforms to a certain target risk based on a plurality of preset risk identification rules. That is, each identification rule may correspond to one risk. After identifying that the operation belongs to the target risk, the data management platform 110 stores (206) the identified result into the storage device 220. Next, the data management platform 110 may read (207) the identified result that conforms to a certain target risk from the storage device 220, and generate (208) corresponding risk alert information for the target risk. The data management platform 110 may present the risk alert information for the target risk, and store (209) the risk alert information for the target risk into the storage device 220.

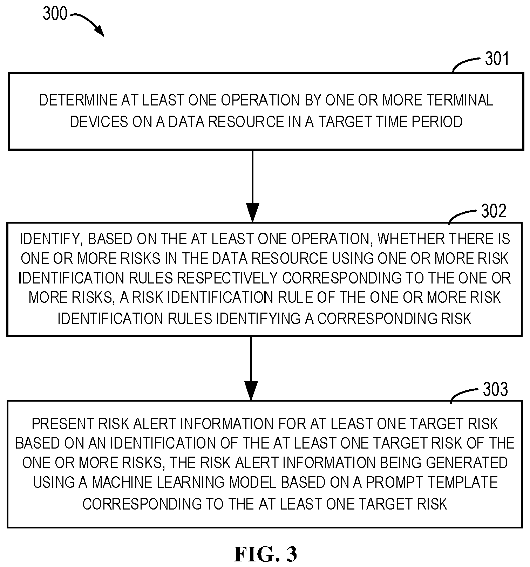

FIG. 3 shows an example flowchart of a method 300 for data security risk alerting according to some embodiments of the present disclosure. For ease of discussion, the process 300 will be described with reference to the environment of FIG. 1. In the environment 100, the data security risk alerting may be achieved by the data management platform 110, but some of the operations may be performed by requesting a server-side device (not shown).

At block 301, the data management platform 110 determines at least one operation by one or more terminal devices 210 on a data resource in a target time period.

The target time period may be the past 8 hours, 12 hours, 24 hours, or the like. In addition, the target time period may also be a specific working time period, a non-working time period, or certain critical business time points (such as a project delivery period, a project bidding period, or the like). The data resource may be a data resource inside an organization (an enterprise, a government agency, other groups, or the like), such as research and development data, work email data, or the like. The operations by the terminal device 210 on the data resource may include but not be limited to accessing, downloading, modifying, copying, deleting, and sending the data resource, or the like.

At block 302, the data management platform 110 identifies, based on the at least one operation, whether there is one or more risks in the data resource using one or more risk identification rules respectively corresponding to the one or more risks, where a risk identification rule of the one or more risk identification rules identifies a corresponding risk.

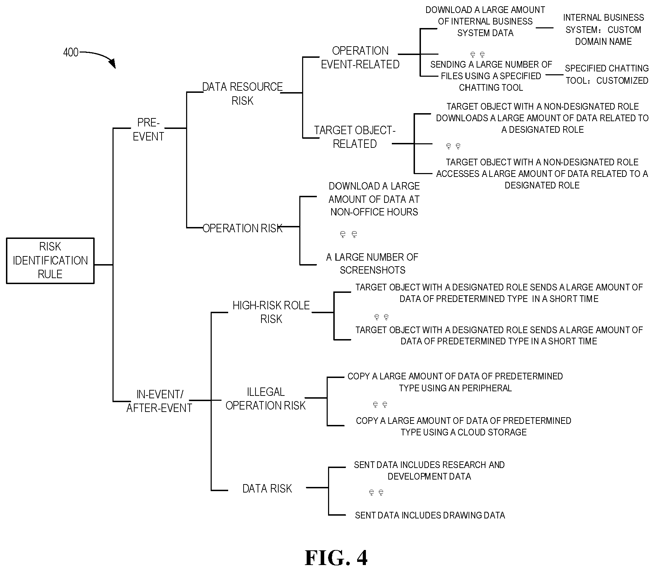

After obtaining the operations by the terminal device 210 on the data resource, the data management platform 110 may perform analysis and judgment on the operations based on one or more predefined risk identification rules to determine whether there is a risk in the data resource. Each identification rule may correspond to one risk. FIG. 4 shows a schematic diagram 400 of classification of risk identification rules according to some embodiments of the present disclosure. According to the time dimension of the operation, the risk identification rule may be divided into a "pre-event" risk identification rule and an "in-event/after-event" risk identification rule.

The focus of the "pre-event" risk identification rule is prevention, and the focus of the "in-event/after-event" risk identification rule is real-time management and remedy. For example, the "pre-event" risk identification rule may be further subdivided into a "data resource risk" identification rule and an "operation risk" identification rule. The "data resource risk" identification rule relates to different dimensions such as an operation event and an operating object. For example, constraining data to be downloaded from a custom domain name may be determined as an "operation event-related" risk. While a target object that is not related to a specific type of work downloads a large amount of data related to the specific type of work, which may be determined as a "target object-related" risk. On the other hand, the "operation risk" identification rule mainly focuses on the operation behavior itself, such as downloading or sending a large amount of data during non-working hours, taking a large number of screenshots of certain specific data resources in a short time, or the like.

In terms of the "in-event/after-event" risk identification rules, FIG. 4 illustratively shows a "high-risk role risk" identification rule, an "illegal operation risk" identification rule, a "data risk" identification rule, and so on. For example, the "high-risk role risk" identification rule may be used to indicate a specified risk operation behavior of a specific group of objects, for example, a target object that is not related to a specific type of work downloads or sends a large amount of data related to the specific type of work. The "illegal operation risk" identification rule may indicate abnormal behaviors (such as using an unauthorized device to connect to an external storage to perform data copying) identified for operations such as sending data resources, connecting devices or the like. In addition, the "data risk" identification rule may indicate sending or accessing images or files of a predetermined type. Through these risk identification rules, the data management platform 110 may effectively identify data security risks in different scenarios.

At block 303, the data management platform 110 presents risk alert information for at least one target risk based on an identification of at least one target risk of the one or more risks, where the risk alert information is generated using a machine learning model based on a prompt template corresponding to the at least one target risk.

Based on the identification of at least one target risk of the one or more risks, the data management platform 110 will generate and present corresponding risk alert information. The risk alert information may be generated using a machine learning model to process a risk prompt template corresponding to the target risk. The machine learning model may correspond to the target model in FIG. 1. The risk prompt template corresponding to the target risk may indicate key information related to the target risk that needs to be determined, such as a risk type, operation details (such as operation time, data type, terminal device performing the operation), and on the like. The data management platform 110 may obtain the risk alert information for the target risk using the machine learning model to process the risk prompt template. For example, if the target risk relates to unauthorized sending of data of a predetermined type, the alert information will present in detail the device that performs the operation, the level of the sent file, and related information of the target object that performs the unauthorized sending, so that the administrator can quickly take action to prevent or investigate.

Through the above process, the data management platform 110 may quickly and accurately identify potential risks in the operations on the data resource and present corresponding risks through standardized alert information. This improves the efficiency of data risk identification, reduces the need for manual intervention, and ensures that an alert may be issued in time when a risk occurs, thereby helping an enterprise to take countermeasures in time to avoid data leakage or illegal operations.

The determination of the one or more risks may be performed based on operation attribute information. For example, for a given risk identification rule of the one or more risk identification rules, the data management platform 110 obtains operation attribute information corresponding to the at least one operation, determines a comparison result between the operation attribute information and a risk condition indicated by the given risk identification rule, and identifies, based on the comparison result, a given risk of the one or more risks corresponding to the given risk identification rule.

The data management platform 110 obtains, according to the given risk identification rule, operation attribute information related to the at least one operation performed by the terminal device. The operation attribute information may indicate at least one of: an operation category of the at least one operation, a type of data targeted by the at least one operation, a time when the at least one operation occurs, or an identity permission attribute of a target object (the user 140) performing the at least one operation.

The operation category may include accessing, downloading, storing, sending (outgoing), and the like. The type of data may include research and development data, email data, and the like. In addition, the type of data may also indicate a level of data, such as Level 1 (L1) data, Level 2 (L2) data, and the like. The time when the operation occurs may correspond to working hours, non-working hours, and the like. The identity permission attribute of the target object performing the operation may indicate a role of the target object, a department to which the target object belongs, and the like.

The data management platform 110 compares the operation attribute information with a risk condition defined in the given risk identification rule. The risk condition may be a specific operation category, a time limit, a data level, an identity permission attribute of an operator, and the like. By comparing the operation attribute information with the risk condition defined in the given risk identification rule, the data management platform 110 may obtain a corresponding comparison result.

If the comparison result indicates that the operation attribute information satisfies the risk condition indicated by the given risk identification rule, the given risk may be identified as one of the target risks. If the comparison result indicates that the operation attribute information does not satisfy the risk condition indicated by the given risk identification rule, the comparison result may indicate that there is no risk in the data resource corresponding to the operation.

After determining the target risk, the data management platform 110 needs to determine the risk alert information for the target risk. The data management platform 110 may determine, based on the at least one target risk, a target operation related to the at least one target risk from the at least one operation. Prompt information related to the target risk is determined using a risk prompt template corresponding to the at least one target risk based on operation information of the target operation. The risk alert information is determined using a machine learning model based on the prompt information.

The data management platform 110 determines, based on the at least one identified target risk, a target operation related to the target risk from records of operations performed by the terminal device 210. These target operations are operation behaviors that cause the target risk, for example, a certain target object sends a large amount of data of a predetermined type during non-working hours.

The data management platform 110 generates prompt information related to the target risk based on operation attribute information (such as an operation category, a data type, an operation time, an object performing the operation, or the like) of the target operation and in combination with a risk prompt template corresponding to the target risk. The risk prompt template may indicate key information that needs to be determined from the operation attribute information corresponding to the operation. For example, if the target risk is a "high-risk role risk", the key information indicated by the risk prompt template may include a time of operation on the data, a type of data targeted by the operation, an identity permission attribute of the target object performing the operation, and on the like. If the target risk is a " risk of a predetermined type of data ", the key information indicated by the risk prompt template may mainly include a type of data targeted by the operation.

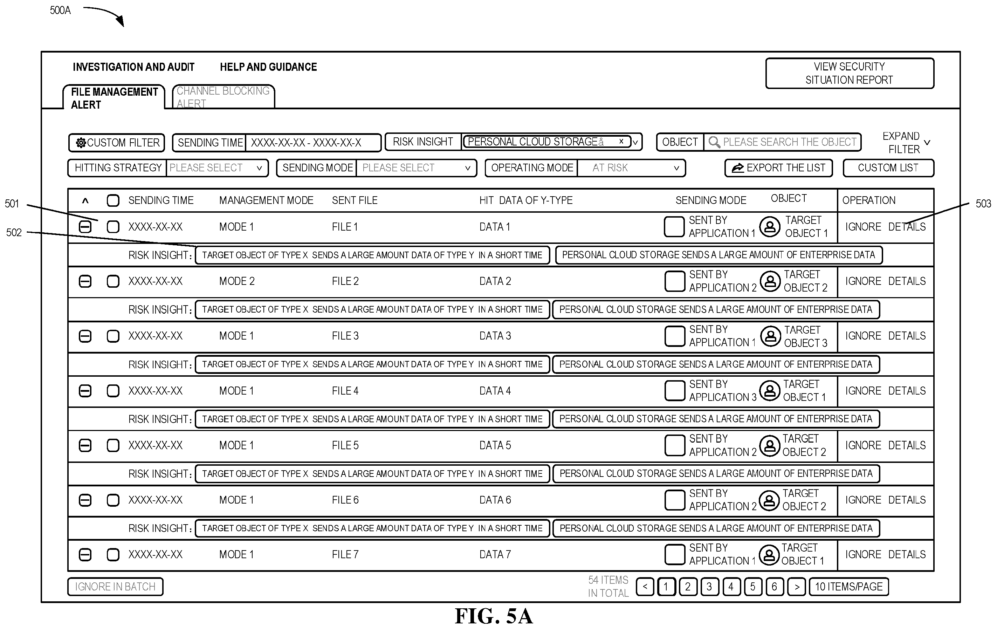

FIG. 5A shows a schematic diagram 500A of risk alert information for a target risk according to some embodiments of the present disclosure. Taking an operation being determined as the operation corresponding to the target risk as an example, in an operation attribute information presentation region 501 of the operation, information related to the operation, such as the operation time, management mode, file information (the file name, type, or the like corresponding to the data resource), hit data of a predetermined type (the corresponding specified content in the data resource), operation mode (sending, downloading, or the like), and object (the identity permission attribute of the target object performing the operation), may be displayed. In an identification presentation region 502 of the operation, a risk identification of the target risk related to the operation may be presented. In a processing region 503 of the target risk, a processing component for the target risk may be presented. For example, the processing component may include "ignore" and "details". In response to receiving a selection of the "details" processing component, detailed content of the risk alert information for the target risk may be presented.

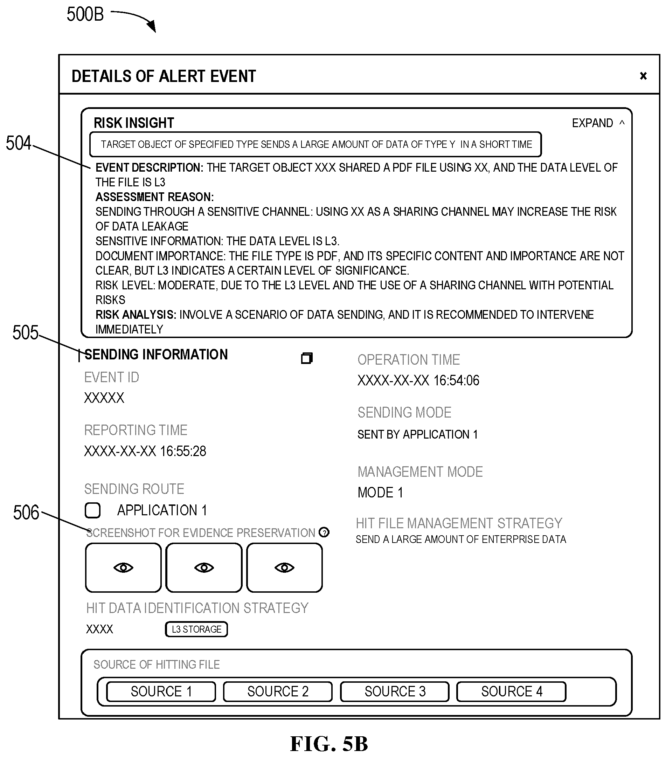

For example, the detailed content of the risk alert information may indicate at least one of: a description of the at least one target risk, a reason for determining the at least one target risk, or a processing suggestion for the target risk. FIG. 5B shows a schematic diagram 500B of a presentation of detailed content of risk alert information for a target risk according to some embodiments of the present disclosure. In a detailed content display region 504, a description of the target risk (event description), a reason for determining the at least one target risk (assessment reason) and risk analysis (processing suggestion for the target risk) may be presented. In addition, information related to the operation, such as an event ID (event identification), operation time, reporting time, or the like, may also be displayed in an information display region. In an evidence display region 505, a screenshot corresponding to the operation, a source of the data resource and other related information may also be displayed.

The risk alert information includes alert information in a target alert dimension of a plurality of alert dimensions. For presenting the risk alert information for the at least one target risk, in response to identifying the at least one target risk, a plurality of prompt templates matching the at least one target risk may be obtained, where risk alert dimensions between the plurality of prompt templates are different from each other. A prompt template in the target alert dimension is determined from the plurality of prompt templates. The alert information for the target alert dimension is presented using the prompt template in the target alert dimension.

The risk alert information includes alert information in a target alert dimension of a plurality of alert dimensions. When presenting the risk alert information for the at least one target risk, the data management platform 110 may process based on different alert dimensions. For example, the alert dimension may include an event dimension and an object dimension.

Taking the event dimension as an example, the prompt template corresponding to the event dimension may be a description for the operation event itself. The main focus of this dimension is the time of the operation (such as whether the operation occurs during non-working hours), the category of the operation (such as downloading, sending, deleting, or the like), the type of data involved (such as high-level data such as L1, L2, or the like), and so on. By selecting the prompt template in this dimension, the data management platform 110 may generate alert information for the operation event and provide a risk description directly related to the operation behavior.

Taking the object dimension as an example, the prompt template corresponding to the object dimension may be a description for the target object performing the operation. For example, the main focus is on the role, permission, or the like of the target object. By selecting the prompt template in this dimension, the data management platform 110 may generate alert information for the object dimension and provide a risk description directly related to the target object.

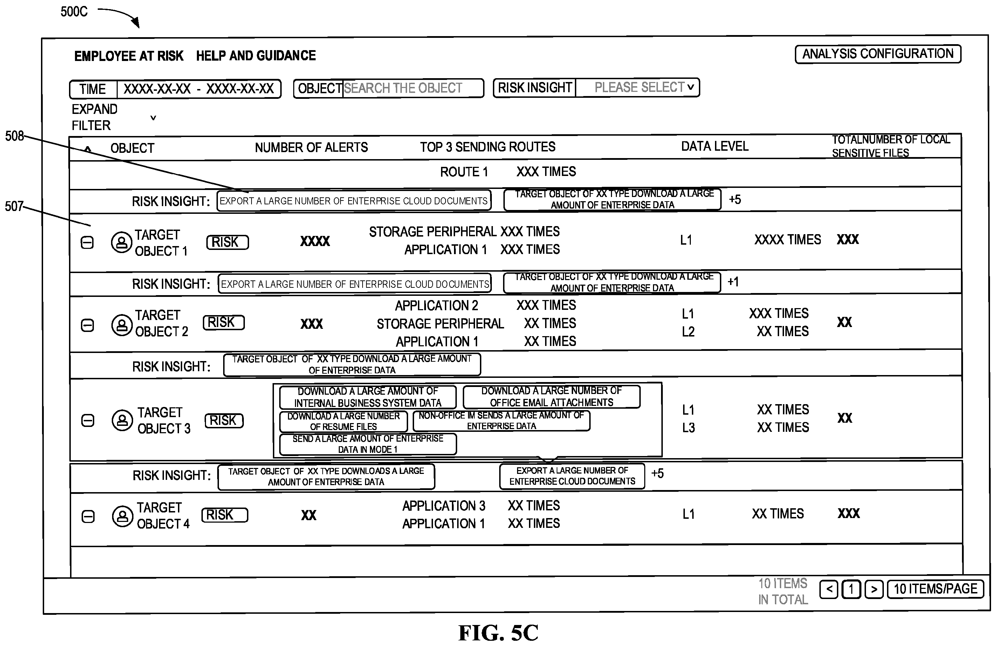

FIG. 5C shows a schematic diagram 500C of risk alert information in an object dimension according to some embodiments of the present disclosure. The presentation result in the object dimension may correspond to the operation of the target object. Taking target object 1 as an example, a risk presentation region 507 corresponding to the target object 1 may display the identification of the target object 1, the number of alerts (the number of times the target object 1 has been alerted), the description of the highest sending route of the target object 1 (the top 3 sending routes), the data level (the level of data corresponding to the operation), the total number of local files of a predetermined type, and on the like. In a risk identification presentation region 508, the situation of at least one target risk involving the target object may be displayed.

Similar to the foregoing example, the risk alert information for the target risk in the object dimension may also include a details page. In the details presentation region of the details page, the details of the risk alert information in the object dimension also include the description of the target risk (action summary), the reason for determining the at least one target risk (assessment reason), and risk analysis (processing suggestion for the target object).

In addition to presenting the risk alert information, the data management platform 110 may also present a risk identification. For example, the risk identification may include presenting a risk identification for the target operation in association with the target operation, and presenting the risk identification for the target operation in association with the target object.

The risk identification may provide a concise visual prompt for an administrator to quickly identify potential high-risk operations or high-risk objects. For example, the risk identification may correspond to the risk identifications presented in the identification presentation region 502 in FIG. 5A and the identification presentation region 508 in FIG. 5C.

When an operation is identified as a target risk (for example, sending data of a predetermined type or performing a large-scale data download during non-working hours), the data management platform 110 may present a risk identification for the target operation in the interface 142. The risk identification may be presented in a manner of color, icon or specific prompt box, so that the administrator may clearly identify the risk property of the operation. In addition, the data management platform 110 not only marks the risk identification for the target operation, but also presents the risk identification in the object dimension in the interface 142, for example, presents the risk identification for different target objects (performing the risk operation). For example, if a target object performs a large number of downloads of data of a predetermined type, the data management platform 110 may present a risk identification in a related display region of the target object in the interface 142, to prompt the administrator that there is a potential risk in the recent behavior of the target object.

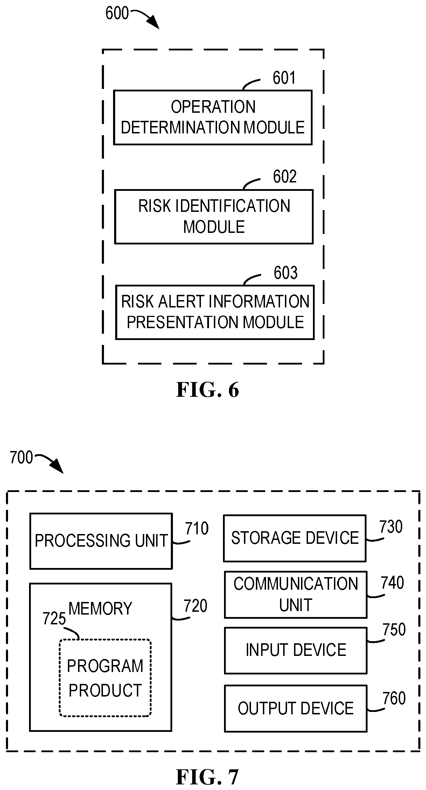

FIG. 6 shows a schematic structural block diagram of an apparatus 600 for data security risk alerting according to some embodiments of the present disclosure. The apparatus 600, for example, may be implemented in or included in the data management platform 110. The individual modules/components in the apparatus 600 may be implemented by hardware, software, firmware, or any combination thereof.

As shown in FIG. 6, the apparatus 600 may include an operation determination module 601 configured to determine at least one operation of one or more terminal devices on a data resource in a target time period; a risk identification module 602 configured to identify, based on the at least one operation, whether there is one or more risks in the data resource using one or more risk identification rules respectively corresponding to the one or more risks, a risk identification rule of the one or more risk identification rules identifying a corresponding risk; and a risk alert information presentation module 603 a risk alert information presentation module configured to present risk alert information for at least one target risk based on an identification of the at least one target risk of the one or more risks, the risk alert information being generated using a machine learning model based on a prompt template corresponding to the at least one target risk.

In some embodiments of the present disclosure, the risk identification module 602 may be configured to: for a given risk identification rule of the one or more risk identification rules, obtain operation attribute information corresponding to the at least one operation; determine a comparison result between the operation attribute information and a risk condition indicated by the given risk identification rule; and identify, based on the comparison result, a given risk of the one or more risks corresponding to the given risk identification rule.

In some embodiments of the present disclosure, the risk identification module 602 may be further configured to: identify the given risk as one of the at least one target risk, in response to the comparison result indicating that the operation attribute information satisfies the risk condition indicated by the given risk identification rule.

In some embodiments of the present disclosure, the operation attribute information indicates at least one of: an operation category of the at least one operation, a type of data targeted by the at least one operation, a time when the at least one operation occurs, or an identity permission attribute of a target object performing the at least one operation.

In some embodiments of the present disclosure, the risk alert information presentation module 603 may be configured to: determine, based on the at least one target risk, a target operation related to the at least one target risk from the at least one operation; determine, based on operation information of the target operation, prompt information related to the target risk using a risk prompt template corresponding to the at least one target risk; and determine the risk alert information using a machine learning model based on the prompt information.

In some embodiments of the present disclosure, the risk alert information includes alert information in a target alert dimension of a plurality of alert dimensions, and the risk alert information presentation module 603 may be further configured to: obtain a plurality of prompt templates matching the at least one target risk, in response to identifying the at least one target risk, risk alert dimensions between the plurality of prompt templates being different from each other; determine a prompt template in the target alert dimension from the plurality of prompt templates; and present the alert information for the target alert dimension using the prompt template in the target alert dimension.

In some embodiments of the present disclosure, the risk alert information indicates at least one of: a description of the at least one target risk, a reason for determining the at least one target risk, or a processing suggestion for the target risk.

In some embodiments of the present disclosure, the apparatus further includes a risk identification presentation module. The risk identification presentation module may be configured to: determine, based on the at least one target risk, a target operation related to the at least one target risk from the at least one operation; and present a risk identification for the target operation in association with the target operation.

In some embodiments of the present disclosure, the risk identification presentation module may be further configured to: determine, based on the at least one target risk, a target operation related to the at least one target risk from the at least one operation and a target object performing the at least one operation; and present a risk identification for the target operation in association with the target object.

FIG. 7 shows a block diagram of an electronic device 700 in which one or more embodiments of the present disclosure can be implemented. It should be understood that the electronic device 700 shown in FIG. 7 is only illustratively and should not constitute any limitation to the function and scope of the embodiments described herein. The electronic device 700 shown in FIG. 7 may include or be implemented as the data management platform 110 in FIG. 1 or the apparatus 600 in FIG. 6.

As shown in FIG. 7, the electronic device 700 is in the form of a general-purpose electronic device. The components of the electronic device 700 may include, but are not limited to, one or more processors or processing units 710, a memory 720, a storage device 730, one or more communication units 740, one or more input devices 750, and one or more output devices 760. The processing unit 710 may be an actual or virtual processor and can execute various processing according to programs stored in the memory 720. In a multi-processor system, a plurality of processing units execute computer-executable instructions in parallel to improve the parallel processing capability of the electronic device 700.

The electronic device 700 generally includes a plurality of computer storage medium. Such medium may be any available medium accessible by the electronic device 700, including but not limited to volatile and non-volatile medium, and removable and non-removable medium. The memory 720 may be a volatile memory (such as a register, a cache, a random access memory (RAM)), a non-volatile memory (such as a read-only memory (ROM), an electrically erasable programmable read-only memory (EEPROM), a flash memory), or a combination thereof. The storage device 730 may be a removable or non-removable medium and may include a machine-readable medium such as a flash drive, a magnetic disk, or any other medium that may be used to store information and/or data and may be accessed within the electronic device 700.

The electronic device 700 may further include additional removable/non-removable, volatile/non-volatile storage media. Although not shown in FIG. 7, a magnetic disk drive for reading or writing from a removable, non-volatile magnetic disk (for example, a "floppy disk") and an optical disk drive for reading or writing from a removable, non-volatile optical disk may be provided. In these cases, each drive may be connected to a bus (not shown) through one or more data medium interfaces. The memory 720 may include a computer program product 725 having one or more program modules configured to perform various methods or actions of various embodiments of the present disclosure.

The communication unit 740 implements communication with other electronic devices through communication medium. Additionally, the functions of the components of the electronic device 700 may be implemented in a single computing cluster or multiple computer machines that can communicate through communication connections. Therefore, the electronic device 700 can operate in a networked environment using logical connections with one or more other servers, network personal computers (PCs), or another network node.

The input device 750 may be one or more input devices, such as a mouse, a keyboard, a trackball, or the like. The output device 760 may be one or more output devices, such as a display, a speaker, a printer, or the like. The electronic device 700 may also communicate with one or more external devices (not shown) through the communication unit 740 as needed, such as storage devices, display devices, or the like, communicate with one or more devices that enable users to interact with the electronic device 700, or communicate with any device that enables the electronic device 700 to communicate with one or more other electronic devices (e.g., network card, modem, or the like). Such communication may be performed via an input/output (I/O) interface (not shown).

According to an illustrative implementation of the present disclosure, a computer-readable storage medium is provided, on which computer-executable instructions are stored, where the computer-executable instructions are executed by a processor to implement the method described above. According to an exemplary implementation of the present disclosure, a computer program product is further provided, which is tangibly stored on a non-transient computer-readable medium and includes computer-executable instructions, and the computer-executable instructions are executed by a processor to implement the method described above.

According to an illustrative implementation of the present disclosure, a computer program product or a computer program is provided, which includes computer instructions, which are stored in a computer-readable storage medium. A processor of a computer device reads the computer instructions from the computer-readable storage medium, and the processor executes the computer instructions, causing the computer device to execute the method provided in various optional manners in FIG. 3. Therefore, details will not be repeated here.

Various aspects of the present disclosure are described herein with reference to flowcharts and/or block diagrams of methods, apparatuses, devices, and computer program products implemented according to the present disclosure. It should be understood that each block of the flowcharts and/or block diagrams and combinations of blocks in the flowcharts and/or block diagrams may be implemented by computer-readable program instructions.

These computer-readable program instructions may be provided to a processing unit of a general-purpose computer, a dedicated computer, or other programmable data processing apparatus, to produce a machine, such that the instructions, when executed by the processing unit of the computer or other programmable data processing apparatus, cause the apparatus to implement the functions/acts specified in one or more blocks of the flowcharts and/or block diagrams. These computer-readable program instructions may also be stored in a computer-readable storage medium. These instructions cause a computer, a programmable data processing apparatus, and/or other devices to work in a specific manner. Thus, the computer-readable medium having instructions stored thereon includes an article of manufacture including instructions for implementing various aspects of the functions/acts specified in one or more blocks of the flowcharts and/or block diagrams.

The computer-readable program instructions may be loaded onto a computer, other programmable data processing apparatus, or other devices, such that a series of operational steps are performed on the computer, other programmable data processing apparatus, or other devices to produce a computer-implemented process, such that the instructions executed on the computer, other programmable data processing apparatus, or other devices implement the functions/acts specified in one or more blocks of the flowcharts and/or block diagrams.

The flowcharts and block diagrams in the drawings show possible architectures, functions, and operations of the system, method, and computer program product according to multiple implementations of the present disclosure. In this regard, each block in the flowcharts or block diagrams may represent a module, program segment, or part of instructions, and the module, program segment, or part of instructions contains one or more executable instructions for implementing specified logical functions. In some alternative implementations, the functions marked in the blocks may also occur in a different order than those marked in the drawings. For example, two consecutive blocks may, in fact, be executed substantially in parallel, or they may sometimes be executed in a reverse order, depending on the functions involved. It should also be noted that each block in the block diagrams and/or flowcharts and combinations of blocks in the block diagrams and/or flowcharts may be implemented by a dedicated hardware-based system that performs the specified functions or acts, or may be implemented by a combination of dedicated hardware and computer instructions.

Various implementations of the present disclosure have been described above, and the above description is exemplary and not exhaustive, and is not limited to the disclosed implementations. Many modifications and variations will be apparent to those skilled in the art without departing from the scope of the appended claims. The selection of terms used herein is intended to best explain the principles of the implementations, the practical application or the improvement of the technology in the market, or to enable other ordinary skilled in the art to understand the various implementations disclosed herein.

## Claims

1. A method (300) for data security risk alerting, comprising:
determining (301) at least one operation by one or more terminal devices on a data resource in a time period;
identifying (302), based on the at least one operation, whether there is one or more risks in the data resource using one or more risk identification rules respectively corresponding to the one or more risks, a risk identification rule of the one or more risk identification rules identifying a corresponding risk; and
presenting (303) risk alert information for at least one risk based on an identification of the at least one risk of the one or more risks, the risk alert information being generated using a machine learning model based on prompt information,
**characterised in that** the prompt information is based on a risk prompt template corresponding to the at least one risk and operation attribute information of an operation related to the at least one risk among the at least one operation, and the risk alert information comprises alert information in an alert dimension of a plurality of alert dimensions, the plurality of alert dimensions comprising an event dimension and an object dimension.

2. The method (300) of claim 1, wherein identifying (302) whether there is the one or more risks in the data resource comprises:
for a given risk identification rule of the one or more risk identification rules,
obtaining operation attribute information corresponding to the at least one operation;
determining a comparison result between the operation attribute information and a risk condition indicated by the given risk identification rule; and
identifying, based on the comparison result, a given risk of the one or more risks corresponding to the given risk identification rule.

3. The method (300) of claim 2, wherein identifying the given risk of the one or more risks corresponding to the given risk identification rule comprises:
identifying the given risk as one of the at least one risk, in response to the comparison result indicating that the operation attribute information satisfies the risk condition indicated by the given risk identification rule.

4. The method (300) of claim 2, wherein the operation attribute information indicates at least one of:
an operation category of the at least one operation,
a type of data targeted by the at least one operation,
a time when the at least one operation occurs, or
an identity permission attribute of an object performing the at least one operation.

5. The method (300) of claim 1, wherein the risk alert information is determined by:
determining, based on the at least one risk, an operation related to the at least one risk from the at least one operation;
determining, based on operation information of the operation, prompt information related to the risk using a risk prompt template corresponding to the at least one risk; and
determining the risk alert information using the machine learning model based on the prompt information.

6. The method (300) of claim 1, wherein the risk alert information comprises alert information in an alert dimension of a plurality of alert dimensions, and presenting (303) the risk alert information for the at least one risk comprises:
obtaining a plurality of prompt templates matching the at least one risk, in response to identifying the at least one risk, risk alert dimensions between the plurality of prompt templates being different from each other;
determining a prompt template in the alert dimension from the plurality of prompt templates; and
presenting the alert information for the alert dimension using the prompt template in the alert dimension.

7. The method (300) of claim **1,** wherein the risk alert information indicates at least one of:
a description of the at least one risk,
a reason for determining the at least one risk, or
a processing suggestion for the risk.

8. The method (300) of claim 1, further comprising:
determining, based on the at least one risk, an operation related to the at least one risk from the at least one operation; and
presenting a risk identification for the operation in association with the operation.

9. The method (300) of claim **1,** further comprising:
determining, based on the at least one risk, an operation related to the at least one risk from the at least one operation and an object performing the at least one operation; and
presenting a risk identification for the operation in association with the object.

10. An electronic device (700), comprising:
at least one processing unit (710); and
at least one memory (720) being coupled to the at least one processing unit (710) and storing instructions for execution by the at least one processing unit (710), the instructions, when executed by the at least one processing unit (710), causing the electronic device (700) to perform the method according to any of claims 1 to 9.

11. A computer-readable storage medium having a computer program stored thereon, the computer program being executable by a processor to implement the method according to any of claims 1 to 9.

12. A computer program product comprising computer-executable instructions, the computer-executable instructions, when executed by a processor, implementing the method according to any of claims 1 to 9.

## Patentansprüche

1. Verfahren (300) für eine Datensicherheitsrisikoalarmierung, umfassend:
Bestimmen (301) mindestens einer Operation durch eine oder mehrere Endgerätvorrichtungen an einer Datenressource in einem Zeitraum;
Identifizieren (302), auf der Grundlage der mindestens einen Operation, ob es ein oder mehrere Risiken in der Datenressource gibt, unter Verwendung einer oder mehrerer Risikoidentifizierungsregeln, die jeweils dem einen oder den mehreren Risiken entsprechen, wobei eine Risikoidentifizierungsregel der einen oder der mehreren Risikoidentifizierungsregeln ein entsprechendes Risiko identifiziert; und
Präsentieren (303) von Risikoalarminformationen für mindestens ein Risiko auf der Grundlage einer Identifizierung des mindestens einen Risikos des einen oder der mehreren Risiken, wobei die Risikoalarminformationen unter Verwendung eines Maschinenlernmodells auf der Grundlage von Prompt-Informationen generiert werden,
**dadurch gekennzeichnet, dass** die Prompt-Informationen auf einer Risiko-Prompt-Vorlage, die dem mindestens einen Risiko entspricht, und Operationsattributinformationen einer Operation, die sich auf das mindestens eine Risiko bezieht, unter der mindestens einen Operation basieren, und die Risikoalarminformationen Alarminformationen in einer Alarmdimension aus mehreren Alarmdimensionen umfassen, wobei die mehreren Alarmdimensionen eine Ereignisdimension und eine Objektdimension umfassen.

2. Verfahren (300) nach Anspruch 1, wobei das Identifizieren (302), ob es das eine oder die mehrere Risiken in der Datenressource gibt, umfasst:
für eine gegebene Risikoidentifizierungsregel der einen oder der mehreren Risikoidentifizierungsregeln,
Erhalten von Operationsattributinformationen, die der mindestens einen Operation entsprechen;
Bestimmen eines Vergleichsergebnisses zwischen den Operationsattributinformationen und einer Risikobedingung, die durch die gegebene Risikoidentifizierungsregel angegeben wird; und
Identifizieren, auf der Grundlage des Vergleichsergebnisses, eines gegebenen Risikos des einen oder der mehreren Risiken, das der gegebenen Risikoidentifizierungsregel entspricht.

3. Verfahren (300) nach Anspruch 2, wobei das Identifizieren des gegebenen Risikos des einen oder der mehreren Risiken, das der gegebenen Risikoidentifizierungsregel entspricht, umfasst:
Identifizieren des gegebenen Risikos als eines des mindestens einen Risikos in Reaktion darauf, dass das Vergleichsergebnis angibt, dass die Operationsattributinformationen die durch die gegebene Risikoidentifizierungsregel angegebene Risikobedingung erfüllen.

4. Verfahren (300) nach Anspruch 2, wobei die Operationsattributinformationen mindestens angeben eines von:
einer Operationskategorie der mindestens einen Operation,
einem Typ von Daten, auf die die mindestens eine Operation abzielt,
einem Zeitpunkt, an dem die mindestens eine Operation stattfindet, oder
einem Identitätserlaubnisattribut eines Objekts, das die mindestens eine Operation durchführt.

5. Verfahren (300) nach Anspruch 1, wobei die Risikoalarminformationen bestimmt werden durch:
Bestimmen, auf der Grundlage des mindestens einen Risikos, einer Operation, die sich auf das mindestens eine Risiko bezieht, aus der mindestens einen Operation;
Bestimmen, auf der Grundlage von Operationsinformationen der Operation, von Prompt-Informationen, die sich auf das Risiko beziehen, unter Verwendung einer Risiko-Prompt-Vorlage, die dem mindestens einen Risiko entspricht; und
Bestimmen der Risikoalarminformationen unter Verwendung des Maschinenlernmodells auf der Grundlage der Prompt-Informationen.

6. Verfahren (300) nach Anspruch 1, wobei die Risikoalarminformationen Alarminformationen in einer Alarmdimension von mehreren Alarmdimensionen umfassen, und das Präsentieren (303) der Risikoalarminformationen für das mindestens eine Risiko umfasst:
Erhalten mehrerer Prompt-Vorlagen, die zu dem mindestens einen Risiko passen, in Reaktion auf das Identifizieren des mindestens einen Risikos, wobei die Risikoalarmdimensionen zwischen den mehreren Prompt-Vorlagen voneinander verschieden sind;
Bestimmen einer Prompt-Vorlage in der Alarmdimension aus den mehreren Prompt-Vorlagen; und
Präsentieren der Alarminformationen für die Alarmdimension unter Verwendung der Prompt-Vorlage in der Alarmdimension.

7. Verfahren (300) nach Anspruch 1, wobei die Risikoalarminformationen mindestens eines angeben von:
einer Beschreibung des mindestens einen Risikos,
einem Grund für das Bestimmen des mindestens einen Risikos, oder
einem Verarbeitungsvorschlag für das Risiko.

8. Verfahren (300) nach Anspruch 1, des Weiteren umfassend:
Bestimmen, auf der Grundlage des mindestens einen Risikos, einer Operation, die sich auf das mindestens eine Risiko bezieht, aus der mindestens einen Operation; und
Präsentieren einer Risikoidentifikation für die Operation in Verbindung mit der Operation.

9. Verfahren (300) nach Anspruch 1, des Weiteren umfassend:
Bestimmen, auf der Grundlage des mindestens einen Risikos, einer Operation, die sich auf das mindestens eine Risiko bezieht, aus der mindestens einen Operation und eines Objekts, das die mindestens eine Operation durchführt; und
Präsentieren einer Risikoidentifikation für die Operation in Verbindung mit dem Objekt.

10. Elektronische Vorrichtung (700), umfassend:
mindestens eine Verarbeitungseinheit (710); und
mindestens einen Speicher (720), der mit der mindestens einen Verarbeitungseinheit (710) gekoppelt ist und Instruktionen zur Ausführung durch die mindestens eine Verarbeitungseinheit (710) speichert, wobei die Instruktionen, wenn sie durch die mindestens eine Verarbeitungseinheit (710) ausgeführt werden, die elektronische Vorrichtung (700) veranlassen, das Verfahren nach einem der Ansprüche 1 bis 9 durchzuführen.

11. Computerlesbares Speichermedium, auf dem ein Computerprogramm gespeichert ist, wobei das Computerprogramm durch einen Prozessor ausführbar ist, um das Verfahren nach einem der Ansprüche 1 bis 9 zu implementieren.

12. Computerprogrammprodukt, umfassend computerausführbare Instruktionen, wobei die computerausführbaren Instruktionen, wenn sie durch einen Prozessor ausgeführt werden, das Verfahren nach einem der Ansprüche 1 bis 9 implementieren.

## Revendications

1. Procédé (300) d'alerte de risque pour la sécurité de données, comprenant de :
déterminer (301) au moins une opération par un ou plusieurs dispositifs terminaux sur une ressource de données sur une période de temps ;
identifier (302), sur la base de ladite au moins une opération, s'il existe un ou plusieurs risques dans la ressource de données en utilisant une ou plusieurs règles d'identification de risque correspondant respectivement aux un ou plusieurs risques, une règle d'identification de risque des une ou plusieurs règles d'identification de risque identifiant un risque correspondant ; et
présenter (303) des informations d'alerte de risque pour au moins un risque sur la base d'une identification dudit au moins un risque parmi les un ou plusieurs risques, les informations d'alerte de risque étant générées à l'aide d'un modèle d'apprentissage automatique basé sur des informations d'invite,
**caractérisé en ce que** les informations d'invite sont basées sur un modèle d'invite de risque correspondant audit au moins un risque et des informations d'attribut d'opération d'une opération liée audit au moins un risque parmi une de ladite au moins une opération, et les informations d'alerte de risque comprennent des informations d'alerte dans une dimension d'alerte de plusieurs dimensions d'alerte, les plusieurs dimensions d'alerte comprenant une dimension d'événement et une dimension d'objet.

2. Procédé (300) selon la revendication 1, dans lequel l'identification (302) de l'existence des un ou plusieurs risques dans la ressource de données comprend de :
pour une règle d'identification de risque donnée des une ou plusieurs règles d'identification de risque,
obtenir des informations d'attribut d'opération correspondant à ladite au moins une opération ;
déterminer un résultat de comparaison entre les informations d'attribut d'opération et une condition de risque indiquée par la règle d'identification de risque donnée ; et
identifier, sur la base du résultat de comparaison, un risque donné des un ou plusieurs risques correspondant à la règle d'identification de risque donnée.

3. Procédé (300) selon la revendication 2, dans lequel l'identification du risque donné des un ou plusieurs risques correspondant à la règle d'identification de risque donnée comprend de :
identifier le risque donné comme l'un dudit au moins un risque, en réponse au résultat de comparaison indiquant que les informations d'attribut d'opération satisfont à la condition de risque indiquée par la règle d'identification de risque donnée.

4. Procédé (300) selon la revendication 2, dans lequel les informations d'attribut d'opération indiquent au moins un élément parmi :
une catégorie d'opération de ladite au moins une opération,
un type de données ciblées par ladite au moins une opération,
un instant où ladite au moins une opération se produit, ou
un attribut de permission d'identité d'un objet exécutant ladite au moins une opération.

5. Procédé (300) selon la revendication 1, dans lequel les informations d'alerte de risque sont déterminées par le fait de :
déterminer, sur la base dudit au moins un risque, une opération liée audit au moins un risque à partir de ladite au moins une opération ;
déterminer, sur la base d'informations d'opération de l'opération, des informations d'invite liées au risque en utilisant un modèle d'invite de risque correspondant audit au moins un risque ; et
déterminer les informations d'alerte de risque en utilisant le modèle d'apprentissage automatique basé sur les informations d'invite.

6. Procédé (300) selon la revendication 1, dans lequel les informations d'alerte de risque comprennent des informations d'alerte dans une dimension d'alerte de plusieurs dimensions d'alerte, et la présentation (303) des informations d'alerte de risque pour ledit au moins un risque comprend de :
obtenir plusieurs modèles d'invite concordant avec ledit au moins un risque, en réponse à l'identification dudit au moins un risque, des dimensions d'alerte de risque entre les plusieurs modèles d'invite étant différentes les unes des autres ;
déterminer un modèle d'invite dans la dimension d'alerte à partir des plusieurs modèles d'invite ; et
présenter les informations d'alerte pour la dimension d'alerte en utilisant le modèle d'invite dans la dimension d'alerte.

7. Procédé (300) selon la revendication 1, dans lequel les informations d'alerte de risque indiquent au moins un élément parmi :
une description dudit au moins un risque,
une raison de déterminer ledit au moins un risque, ou
une suggestion de traitement pour le risque.

8. Procédé (300) selon la revendication 1, comprenant en outre de :
déterminer, sur la base dudit au moins un risque, une opération liée audit au moins un risque à partir de ladite au moins une opération ; et
présenter une identification de risque pour l'opération en association avec l'opération.

9. Procédé (300) selon la revendication 1, comprenant en outre de :
déterminer, sur la base dudit au moins un risque, une opération liée audit au moins un risque à partir de ladite au moins une opération et un objet exécutant ladite au moins une opération ; et
présenter un identification de risque pour l'opération en association avec l'objet.

10. Dispositif électronique (700) comprenant :
au moins une unité de traitement (710) ; et
au moins une mémoire (720) étant couplée à ladite au moins une unité de traitement (710) et stockant des instructions en vue d'une exécution par ladite au moins une unité de traitement (710), les instructions, lorsqu'elles sont exécutées par ladite au moins une unité de traitement (710), amenant le dispositif électronique (700) à exécuter le procédé selon l'une quelconque des revendications 1 à 9.

11. Support de stockage lisible par ordinateur sur lequel est stocké un programme informatique, le programme informatique pouvant être exécuté par un processeur pour mettre en œuvre le procédé selon l'une quelconque des revendications 1 à 9.

12. Produit de programme informatique comprenant des instructions exécutables par ordinateur, les instructions exécutables par ordinateur, lorsqu'elles sont exécutées par un processeur, mettant en œuvre le procédé selon l'une quelconque des revendications 1 à 9.
